# EUROPEAN PATENT APPLICATION

(11) **EP 4 664 828 A1**
(43) Date of publication of application: **17.12.2025**
(21) Application number: 25180375.5
(22) Date of filing: 03.06.2025
(51) Int. Cl.: H04L 9/40, H04L 67/1004, H04L 67/101

(54) **POLICY ENFORCEMENT IN A NETWORK USING DISTRIBUTED STATELESS ENFORCEMENT**

(30) Priority: 13.06.2024 US 202418742508
(71) Applicant: Arista Networks, Inc., Santa Clara, CA 95054 (US)
(72) Inventor: Capper, Simon Francis, Santa Clara, CA, 95054 (US); Mittal, Anuraag, Santa Clara, CA, 95054 (US); Sam, Dennis, Santa Clara, CA, 95054 (US)
(74) Representative: Hoffmann Eitle

(57) **Abstract**

Systems and methods for distributing policy enforcement in a network are disclosed. Embodiments may allow the distribution of enforcement of policies from firewalls to other network elements to allow the offloading of the enforcement of actions of those policies for flows to network elements, where the applicability of those policies to those flows was determined by the firewall.

## Description

### BACKGROUND

Firewalls are important components of modern networks. This is the case at least because firewalls may play an integral part in the security infrastructure of such networks, acting as barriers between networks, or devices on those networks, by examining and controlling the flow of traffic in a network based on traffic control policies.

These firewalls can inspect individual packets of data as they traverse the network and apply particular traffic control policies based on the characteristics of the packets and the traffic control policies. Traffic control policies installed at a firewall thus define a set of matching data along with an action. Accordingly, when traffic (e.g., packets) arrives at network elements in the network, the network elements can forward this traffic to a firewall. The firewall inspects traffic received from these network elements to determine if that traffic matches a traffic control policy installed at the firewall. The firewall can then enforce the corresponding action for any matched traffic control policies.

Oftentimes, traffic control policies may be defined in terms of data that can only be obtained through some form of packet inspection. Packet inspection, especially as it pertains to L4 and higher stateful inspection of traffic in a firewall, is, however, computationally expensive. Moreover, it is typical that the determination of an action associated with certain traffic control policy may be rarely, if ever, re-evaluated for specific traffic.

It would thus be desirable to reduce the computational burden placed on firewalls in a network in association with the application of traffic control policies while also reducing the commensurate increase in traffic necessitated by the need to transfer such traffic from other network elements to the firewall in order to enforce those traffic control policies.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIGURE 1 is a block diagram illustrating a network topology.
FIGURE 2 is a block diagram illustrating a logical depiction of the use of a firewall in a network.
FIGURE 3 is a block diagram illustrating a network architecture for distributed policy enforcement for flows in accordance with one embodiment.
FIGURE 4 is a block diagram depicting a firewall instance adapted for offloading policy enforcement for flows in a network according to an embodiment.
FIGURE 5 is a block diagram depicting a network element adapted for offloading policy enforcement for flows in a network according to an embodiment.
FIGURE 6 is a flow diagram depicting one embodiment of a method for offloading flows from a firewall.
FIGURE 7 is a flow diagram depicting one embodiment of a method for installing offloaded flows at a network element.

### DETAILED DESCRIPTION

As discussed, in modern network environments, firewalls are essential components of network security infrastructure, acting as barriers between trusted internal networks and untrusted external networks, such as the Internet. These firewalls enforce traffic control policies (or just policies) installed on the firewall by examining and controlling the flow of traffic based on these policies. As firewalls may inspect the contents of packets at the application layer, in certain cases firewalls can detect and block specific types of traffic based on application-level protocols, such as HTTP, FTP, or SMTP.

Certain implementations of firewalls may comprise a distributed firewall (e.g., a sharded or segmented firewall) such that a firewall may include one more firewall instances. In a distributed firewall, a set of firewall instances may cooperate to perform firewall functionality within the network. For example, a distributed firewall may be utilized in a network architecture that involves deploying multiple firewall instances to create separate zones within a network. Each firewall instance can, for example, serve as a barrier between different segments of the network, controlling the flow of traffic and enforcing security policies specific to each segment.

To illustrate in more detail, firewalls inspect individual packets of data as they traverse the network. Each packet contains information such as source and destination IP addresses, port numbers, or protocol types. Traffic control policies installed at the firewall define a set of matching data along with an action (e.g., such as permit or deny). The matching data used to define the policy can be based on various criteria associated with traffic, such as source and destination IP addresses (e.g., including ranges or prefixes), port numbers (or ranges), protocols (e.g., a layer 4 (L4) protocol), and even data related to specific applications or services.

Accordingly, when traffic (e.g., packets) arrives at network elements (e.g., devices, either physical or virtual) in the network, such as edge network elements (e.g., top of rack (TOR) switches or the like), the network element forwards this traffic to the firewall. The firewall inspects traffic received from these network elements to determine if that traffic matches a traffic control policy installed at the firewall. Namely, the firewall may compare data obtained from, or associated with, a packet against the matching data of the installed policies to see if a policy is matched. The firewall can then enforce the corresponding action (e.g., permit or deny) for any matched policies.

Packet inspection, especially as it pertains to L4 and higher stateful inspection of traffic in a firewall, is, however, computationally expensive. Further, the firewall itself may be additionally burdened when traffic is forwarded to the firewall, as the firewall normally has to hair pin such traffic. Moreover, it is typical that the determination of an action associated with a flow (e.g., if the flow is allowed or denied) is done only when the flow is first established, and is usually never re-evaluated. In particular, when a traffic control policy is matched, the firewall may establish a flow at the firewall. The establishment of a flow at the firewall may include storing a definition of the flow comprising a tuple (e.g., a set of data) defining that flow, such as a source IP, a destination IP, a source port, a destination port, and a protocol associated with traffic corresponding to that flow. This establishment of the flow may also include storing the flow (i.e., the set of data defining the flow) in association with the action as determined from the matching traffic control policy. Thus, when traffic associated with the same flow is subsequently received, that traffic can be matched against the installed flow and the corresponding action for the installed flow taken by the firewall.

As may be realized, packet inspection at a firewall is computationally expensive and the need for inspection of traffic by a firewall may increase (e.g., east-west) traffic in a network because of the need to transmit such traffic from network elements to the firewall for inspection. Administrators or operators of such networks may thus desire to reduce the computational burden placed on firewalls in a network while also reducing the commensurate increase in traffic necessitated by the need to transfer such traffic from other network elements to the firewall in order to enforce the policies.

In many cases, certain network elements, such as network edge elements (e.g., TOR switches), may include hardware or software resources that are underutilized. However, it has heretofore been impossible to take advantage of these underutilized resources on other network elements in an network to perform certain types of policy enforcement, as such network elements are not capable of performing packet inspection (e.g., stateful or L4 or higher packet inspection), or could not be made capable of performing such inspection without slowing packet processing at these elements to an unacceptable level.

What is desired, therefore, are systems and methods to improve firewall throughput by offloading policy enforcement from a firewall to other network elements while still maintaining the ability to enforce policies requiring packet inspection (e.g., stateful or L4 packet inspection), including the enforcement of policy actions made by a firewall in accordance with such packet inspection.

To those ends, among others, embodiments as disclosed herein may provide systems and methods for distributing traffic control policy enforcement in a network. Specifically, embodiments may allow the distribution of enforcement of traffic control policies from firewalls to other network elements, including network edge elements such as TOR switches or the like. Thus, embodiments may allow the offloading of enforcement of actions for flows to network elements where those actions were determined for those flows by the firewall after (e.g., stateful, or L4 or higher) packet inspection of those flows. This allows the enforcement of policy actions on flows determined from stateful inspection of flows at network elements (including network edge elements) that are not themselves capable of such stateful packet inspection, reducing traffic in the network and reducing the computational burden on the firewall.

To illustrate in more detail, according to embodiments, policies may be installed at a firewall in a network. This firewall may comprise distributed functionality residing at one more logical or physical firewall instances in the network. The policies can be defined by users (e.g., administrators) of the network using an interface associated with network management such as that offered by a cloud based network management system. The policies are thus defined using a set of matching data along with an action (e.g., such as permit or deny). These defined policies are installed on the firewall in the network. In the case where the firewall comprises multiple distributed firewall instances, each policy may be installed at one of the instances, multiple of the firewall instances, or all of the firewall instances of the firewall.

Using these installed policies, the firewall (e.g., each firewall instance) may make policy enforcement decisions (e.g., permit or deny) with respect to flows in the network. These policy enforcement decisions may result from applying these policies to traffic forwarded to the firewall from network elements in the network (e.g., network edge devices). When these policy enforcement decisions are made the firewall may establish the flow at the firewall, including storing the flow (i.e., the tuple defining the flow) in association with the determined action from a matching traffic control policy for the flow. Thus, when traffic associated with the same flow is subsequently received, that traffic can be matched against the installed flow and the corresponding action for the installed flow taken by the firewall.

Each of the established flows at the firewall may also be associated with a session. The session may be a stateful session (e.g., for TCP flows) that have a start and end time or keepalive timer, or may be stateless session (e.g., for UDP flows) that may have a timer and associated expiration time. In this manner, it can be determined when a session for a flow has ended based upon a timer associated with the session. This timer may have, for example, an age out period whereby if the timer is not reset before expiration of the age out period the flow session may be deemed as ended or inactive and the flow removed from the firewall.

At one or more points or intervals, a firewall flow distribution agent on the firewall may evaluate these flows (e.g., the flows established at the firewall) to determine one or more of these flows to offload to other network elements in the network, such as network edge elements (e.g., TOR switches or the like). The determination of which of the established flows at the firewall should be offloaded may be made using a heuristic (e.g., algorithm) based on an offload metric. This offload metric may be based on almost any criteria desired, including determined data or a prediction associated with the flow, or a priority associated with the flow, where the prediction may be statically assigned or algorithmically determined. The offload metric could be, based on an amount of traffic for that flow (or meeting that policy) that is received at the firewall, a quality of service indicator associated with the policy, that a user has designated or specified that a policy should be offloaded, or some other criteria.

For a flow that the firewall flow distribution agent has determined should be offloaded, an offload message including that flow (e.g., the tuple defining that flow, such as a source IP, a destination IP, a source port, a destination port, and a protocol) and the enforcement action (e.g., permit or deny) may be sent to a network element for offload. In some embodiments, a (e.g., offload) priority may be associated with flows installed at the firewall and such a priority may be included in an offload message so that priority may be utilized by network elements receiving such an offload message.

In one embodiment, the offload message may only be sent to, or obtained by, network elements involved with that flow, such as the network edge element at which traffic for that flow is received from the device (e.g., host) sending traffic of that flow. To illustrate in more detail, when traffic of a flow is initially redirected to the firewall from a network element (e.g., a network edge element), this redirected traffic may be encapsulated in a Virtual Extensible LAN (VXLAN) tunnel implemented in the network. Thus, the encapsulating packet for redirecting that traffic from that network element to the firewall through a VXLAN tunnel may include, as the source IP address, the IP address of the network element (e.g., network edge element) that redirected the traffic for that flow to the firewall. As such, when a flow is established at the firewall (e.g., based on the inspection for traffic for that flow and any matching policies at the firewall), that established flow may be associated with the IP address of the network element (e.g., network edge element) that receives traffic for that flow as determined from the source IP address of the VXLAN encapsulation packet including the redirected traffic for that flow.

Accordingly, when the firewall flow distribution agent at the firewall determines a flow should be offloaded, the firewall flow distribution agent can determine the IP address of the network element associated with the flow to which an offload message for that flow should be sent. The offload message for that flow can thus be directed specifically to that network element. In one embodiment, for example, these offload messages may be distributed to network elements according to a publish subscribe distribution architecture (e.g., a mounting framework).

Specifically, a flow distribution agent on the network element may subscribe to messages associated with the IP address of that network element. For example, the network element may send a subscription notification to each firewall instance subscribing to messages for the IP address of that network element. When the flow distribution agent on the firewall determines that an offload message is be sent for a flow, the firewall flow distribution agent determines the IP address of the network element associated with the flow that it is attempting to offload and publishes the offload message (e.g., the message specifying the tuple for that flow and the policy enforcement action for that flow) for that determined IP address. The network element flow distribution agent subscribed to messages for that IP address will then receive that offload message at the network element associated with that IP address.

A network element flow distribution agent may receive an offload message (e.g., an offload message published to its IP address), and install the flow and enforcement action specified by the offload message at the network element (e.g., store the tuple defining the flow and the associated enforcement action), such that when traffic associated with that flow is received at the network element the enforcement action may be applied by the network element. In this manner, the enforcement action for the flow may be applied at the network element without the network element forwarding that traffic to the firewall.

In one embodiment, the network element flow distribution agent may use a best effort methodology with respect to these offload messages, and may make an (e.g., independent) determination whether flows specified in offload messages should (or should not) be installed at the network element (or which flows should be deinstalled from the network element). Moreover, the network element flow distribution agent may not acknowledge the receipt of an offload message. Accordingly, there may be no requirement that the network element flow distribution agent maintain data on which firewall instance manage such flows (e.g., when multiple firewall instances are implemented in the network) and seamless transition between a single or distributed firewall implementation is allowed without any changes to the flow distribution methodology or architecture.

In particular, in certain cases a network element flow distribution agent may receive a large volume of offload messages, or the firewall in the network may be a distributed firewall including a number of firewall instances and the network element flow distribution agent may receive offload messages from these multiple firewall instances. Accordingly, it may be desirable for embodiments of a network element flow distribution agent to select among the various flows in received offload messages to determine which of those flows to install at the network element. This determination whether to (or not to) install a flow at a network element may be made based on a wide variety of criteria such as hardware resources associated with, or available at, the network element, priorities associated with the flows as received in the offload messages or determined at the network element, or other factors.

When it is determined that a flow specified in an offload message is to be installed at the network element, the network element flow distribution agent may install the flow at the network element including storing the flow (i.e., the tuple defining the flow) in association with the determined action as specified in the offload message received by the network element flow distribution agent. Accordingly, when traffic associated with that flow is subsequently received at that network element, the network element flow distribution agent may determine that the flow is installed at the network element and take the enforcement action specified in association with that flow without redirecting the traffic for that flow to the firewall. In this manner, enforcement actions determined for a flow at a firewall (e.g., even including enforcement actions based on stateful L4 or higher based packet inspection) may be applied at network elements (e.g., network edge elements) without actual involvement of the firewall, including without the need to redirect traffic for such flows to the firewall.

In addition to enforcing the actions for such flows at the network element, in some embodiments the network element flow distribution agent may periodically update the firewall flow distribution agent on the state of these flows using a heartbeat message or the like. According to one embodiment therefore, the network element flow distribution agent may maintain a hit counter associated with each flow installed at the network element. Each time traffic (e.g., a packet) associated with that flow is received at the network element the network element flow distribution agent may increment (or otherwise update) this hit counter associated with the flow. This hit counter may be reset at a heartbeat interval. The period of this heartbeat interval may be fixed or algorithmically determined based on a heuristic where the heuristic used to determine such a heartbeat interval can, for example, be a function based on an age out time for flow sessions on the firewall in the network. At the expiration of this heartbeat interval then, if the hit counter for a flow is non-zero (or otherwise indicates traffic for the flow has been received during the heartbeat interval), a heartbeat message (e.g., a keepalive message) specifying that flow (e.g., including the tuple defining that flow) may be sent to the firewall (e.g., one, multiple, or all firewall instances). This heartbeat message may, for example, be sent using a stateless protocol such as UDP. When the firewall flow distribution agent receives such a heartbeat message it renews the flow session at the firewall associated with the flow specified in the heartbeat message (e.g., it resets, recalculates or renews the timer associated with the session for that flow). As such if no heartbeat message is received for a flow for which a flow session is maintained at the firewall, that flow session will naturally age out and be removed at the firewall.

In one embodiment, such as where a firewall in the network may be implemented in multiple instances, a heartbeat message may not only specify the flow (e.g., include the tuple defining the flow) but may additionally specify identifying information associated with network element on which the flow is installed. This network element identifying information, can for example, be included in a field of a header of a packet including the heartbeat messages and may be, for example, a MAC address of the network element or another type of identifier for the network element.

For example, in one embodiment the heartbeat message may comprise a VXLAN encapsulated packet, where the outer header provides identifying information to identify, for example, the network element on which the flow is installed using the source IP field (e.g., and not the MAC). A unique Direction MAC (D-MAC) address (e.g., included in the heartbeat message or outer VXLAN header including the heartbeat message) may allow a receiving firewall instance to identify the received VXLAN packet as a heartbeat message (e.g., leaving the inner-header in the VXLAN packet to be identical to that of a packet in the flow). This allows for any intermediate load balancers to correctly load balance the heartbeat message to the correct firewall instance (e.g., the firewall instance where the associated flow is installed) and for the firewall instance to identify the flow to which that heartbeat message is related.

In this manner, in cases where the firewall includes multiple firewall instances, the heartbeat message may be routed to the appropriate firewall instance (e.g., the firewall instance responsible for processing traffic for that network element or from which that flow was offloaded to that network element). For example, a load balancer balancing traffic between different firewall instances may utilize this network element identifying information to load balance the heartbeat message from the network element to a correct firewall instance without having to store any additional state at the load balancer or perform any additional parsing or packet processing (e.g., greater than what would be required for standard load balancing to those firewall instances).

The maintenance of these sessions at the firewall may be highly useful in a variety of scenarios. As one example, a reload or reboot of a network element (or any other event that may cause a loss or reset of data or memory at the network element) may cause traffic to leak towards the firewall before requests to offload are made. As another example, if a network (e.g., host) device connected to one network element moves to another network element (e.g., a network edge element such as a switch) that network element will not have any flows associated with the newly connected network device installed on that network element. Thus, when that new network element receives traffic for that same flow (e.g., associated with the same tuple of source IP, source port, destination IP, destination port, protocol, etc.) the new network element will again route that traffic from that flow to the firewall. The firewall can receive the traffic for that flow from the network element and because the tuple generated from this received traffic is the same, the firewall may match this traffic to an ongoing flow session. The firewall flow distribution agent can then determine that the traffic for an established flow session is coming from a new network device (e.g., the source IP address of the originating network element in the VXLAN packet for the traffic is different from the source IP associated with the flow session at the firewall). Based on this determination the firewall flow distribution agent determines that the flow and enforcement action need to be installed on this new network element and sends a message for that flow and enforcement action to that network element (e.g., using the IP address of that network element).

As embodiments may allow the distribution of policy enforcement actions to network elements, including enforcement actions determined at a firewall based on stateful packet inspection, embodiments may provide a number of advantages. For example, by offloading policy enforcement actions that a firewall has determined for a flow after stateful inspection to an edge network element embodiment may allow the constructive use of hardware resources available and unused by edge network elements to avoid processing traffic at a firewall. As more efficient use of computational resources may be made by applying enforcement actions determined by the firewall at network elements earlier in the flow (e.g., at the network edge) the need to have such traffic inspected by the firewall may be obviated once an action has been determined. Thus, the application of these policy enforcement actions can be done by using unallocated hardware resources on a network element without the subsequent need for L4 or higher inspection.

As such, embodiments may provide a unique solution that integrates a firewall with edge network elements to apply an action resulting from stateful policy inspection on a network element that is unable to perform inspection beyond L3 (e.g., L4 or higher). This capability allows firewalls to see a reduced traffic load which may, in turn, reduce the need for large, complex or expensive firewalls. Moreover, as this integration between the firewall and network elements can be based on a best effort basis network changes may be accommodated without compromising security.

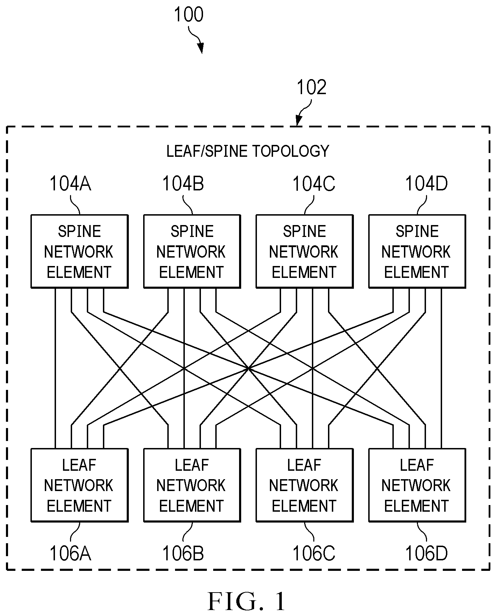

Initially, it may be helpful to an understanding of embodiments to discuss an example of a network architecture that may be useful in describing particular embodiments. Attention is thus directed now to FIGURE 1 which is an illustration of a network 100 having a leaf/spine topology 102 in which a set of spine network elements 104A-D are coupled to a set of leaf network elements 106A-D over a (e.g., multi-path) switching fabric. A leaf/spine topology 102 may be an alternate to a traditional three-layer core/aggregation/access network architecture. In certain cases, leaf network elements 106A-D mesh into the spine network elements 104A-D using a layer-3 (e.g., TCP/IP) protocol. Spine network elements 104A-D usually provide the core data connections for the network, while the leaf network elements 106A-D provide access to the network for host devices (e.g., servers, workstations, virtual machines). Routes through the network 100 may be, for example, configured in an active state through the use of Equal-Cost Multi-pathing (ECMP), allowing all connections to be utilized while avoiding loops within the network 100. While leaf/spine network topologies as discussed with respect to FIGURE 1 may be used in describing embodiments herein, it will be understood that the use of such a leaf/spine topology in describing embodiment is for ease of description. Other embodiments may be utilized with equal efficacy in other network topologies and architecture. Additionally, while embodiments may be described in association with firewalls, the term firewall as utilized herein should be understood generally without limitation to refer to any element (physical or virtual) in a network that may be utilized to apply policies to control or otherwise manage traffic in a network.

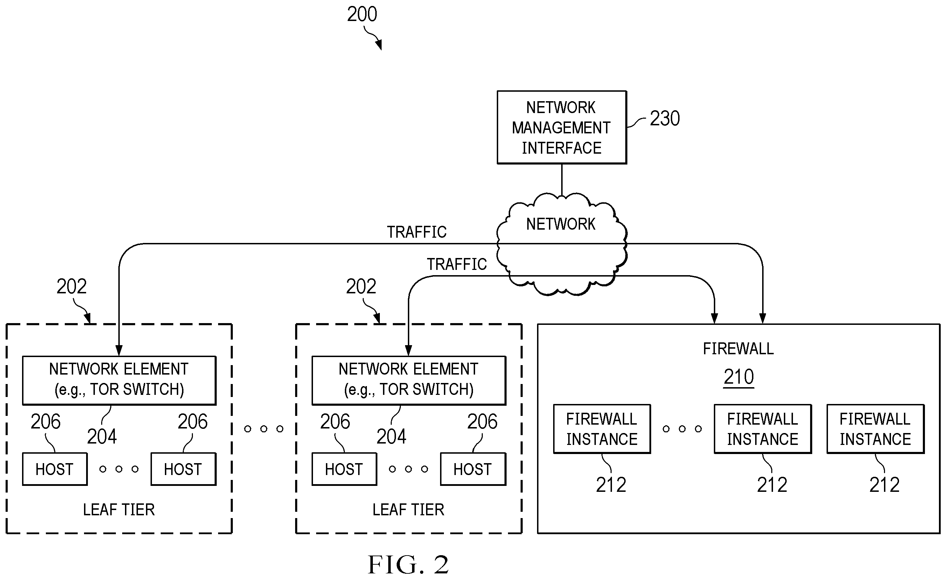

FIGURE 2 is a logical depiction of the use of a firewall in a (e.g., leaf/spine) network 200. Here, a set of leaf tiers 202 may each include a network element 204 that may be TOR switches or the like connected to one or more hosts 206 (e.g., servers, etc.). Each of these network elements 204 may also be connected to firewall 210. Firewall 210 may comprise one or more firewall instances 212. For example, firewall 210 may comprise a distributed firewall (e.g., a sharded or segmented firewall) such that a firewall may include one or more firewall instances 212. In a distributed firewall, the set of firewall instances 212 may cooperate to perform firewall functionality within the network 200.

Policies may be configured and installed on firewall 210 (e.g., at particular instances 212 of firewall 210) using a network management interface 230, which can be a cloud based network management interface or the like. These policies installed at the firewall define a set of matching data along with an action (e.g., such as permit or deny). The matching data used to define the policy can be based on various criteria associated with traffic in network 200, such as source and destination IP addresses (e.g., including ranges or prefixes), port numbers (or ranges), protocols (e.g., a layer 4 (L4) protocol), and even data related to specific applications or services.

Accordingly, when traffic (e.g., packets) arrive at network elements 204 in the network 200, the network element 204 forwards this traffic to the firewall 210. The firewall 210 inspects traffic received from these network elements 204 to determine if that traffic matches a policy installed at the firewall 210. Namely, the firewall 210 may compare data obtained from, or associated with, a packet against the matching data of the installed policies to see if a policy is matched. The firewall can then enforce the corresponding action (e.g., permit or deny) for any matched policies.

In most cases, when a policy is matched, the firewall 210 may establish a flow at the firewall 210. Generally, a flow may be associated with a set of packets having a set of common attributes or characteristics. These attributes may be based on, for example, (i) one or more packet header field(s) (e.g., source or destination IP address), transport header field (e.g., source or destination port number), or application header field (e.g., RTP header fields); (ii) one or more characteristics of the packet itself (e.g., number of MPLS labels, etc.), (iii) one or more of the fields derived from packet treatment (e.g., nexthop IP address, the output interface, etc.), or other attributes associated with traffic in a network. A packet can thus be defined to belong to a flow if it has the attributes defining that flow.

The establishment of a flow at the firewall may thus include storing a definition of the flow comprising a tuple (e.g., a set of data) defining that flow, such as a source IP (e.g., of a host 206 that is sending the traffic), a destination IP (e.g., of a host 206 that is the intended recipient of the traffic), a source port (e.g., associated with host 206 that sent the traffic), a destination port (e.g., specified for a recipient of the traffic), and a protocol (e.g., TCP/IP, UDP, etc.) associated with traffic corresponding to that flow. This establishment of the flow may also include storing the flow (i.e., the set of data defining the flow) in association with the action as determined from the matching policy. Thus, when traffic associated with the same flow is subsequently received at the firewall 210 (e.g., from a network element 204), that traffic can be matched against the installed flow and the corresponding action for the installed flow taken by the firewall 210.

As may be realized, packet inspection at a firewall is computationally expensive and the need for inspection of traffic by a firewall may increase (e.g., east-west) traffic in network 200 because of the need to transmit such traffic from network elements 204 to the firewall 210 for inspection. Administrators or operators of such networks may thus desire to reduce the computational burden placed on firewalls in a network while also reducing the commensurate increase in traffic necessitated by the need to transfer such traffic from other network elements to the firewall in order to enforce the policies.

In many cases, network elements 204 (e.g., TOR switches), may include hardware or software resources that are underutilized. What is desired, therefore, are systems and methods to improve firewall throughput by offloading policy enforcement from a firewall to other network elements while still maintaining the ability to enforce policies requiring packet inspection (e.g., stateful or L4 packet inspection), including the enforcement of policy actions made by a firewall in accordance with such packet inspection.

To those ends, among others, embodiments as disclosed herein may provide systems and methods for distributing policy enforcement in a network. Specifically, embodiments may allow the distribution of enforcement of policies from firewalls to other network elements. Thus, embodiments may allow the offloading of enforcement of actions for flows to network elements where those actions were determined for those flows by the firewall after packet inspection of those flows. This allows the enforcement of policy actions on flows determined from stateful inspection of flows at network elements that are not themselves capable of such stateful packet inspection, reducing traffic in the network and reducing the computational burden on the firewall.

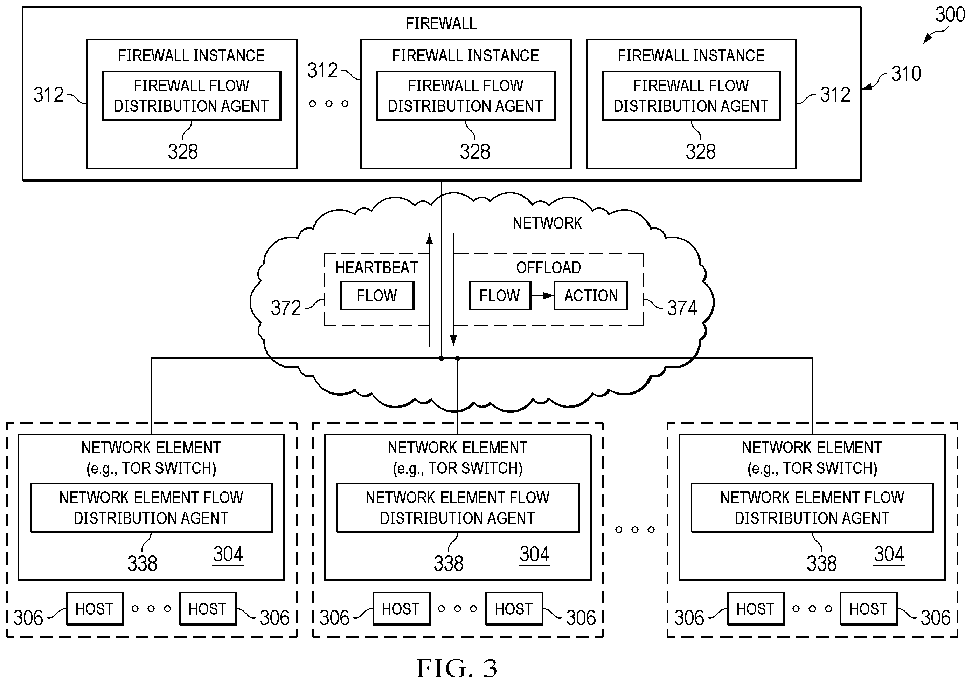

Looking now at FIGURE 3, a network architecture for the distribution of policy enforcement in accordance with one embodiment is depicted. Here, network system 300 may include firewall 310 comprising one or more firewall instances 312, where the firewall 310 may be coupled to one or more network elements 304 and each of those network elements 304 may be coupled to one or more hosts 306. For example, network system 300 can be implemented on a (e.g., layer-3) leaf/spine topology and includes a spine tier and a leaf tier, where each leaf tier includes one or more network elements 304. Each of the network elements 304 of a leaf tier can couple to one or more hosts 306.

A host 306 may include functionality to generate, receive, or transmit network traffic (e.g., packets or MAC frames). Examples of a host 306 include, but are not limited to, a server (e.g., a database server, a dynamic host configuration protocol (DHCP) server, an application server, a file server, a print server, a mail server, or any other server), a desktop computer, a mobile device (e.g., a laptop computer, a smartphone, a personal digital assistant (PDA), a tablet computer, or any other mobile device), or any other type of computing device. In one embodiment, each network element 304 can be configured as a TOR switch, although other configurations for these network elements 304 may be used in other embodiments (e.g., End of Row, etc.).

As discussed, policies may be installed at firewall 310 in network system 300 (e.g., installed at one or more firewall instances 312). Using these installed policies, the firewall 310 (e.g., each firewall instance 312) may make policy enforcement decisions (e.g., permit or deny) with respect to flows in the network. These policy enforcement decisions may result from applying these policies to traffic forwarded to the firewall from network elements 303 in the network. When these policy enforcement decisions are made the firewall 310 may establish the flow at the firewall 310, including storing the flow (i.e., the tuple defining the flow) in association with the determined action from a matching policy for the flow.

Network system 300 may include firewall flow distribution agent 328 at each the one or more firewall instances 312 and network element flow distribution agent 338 on network elements 328, where the firewall flow distribution agent 328 and network element flow distribution agent 328 may cooperate to facilitate the offloading of the enforcement of policies installed at firewall 310 in conjunction with particular flows.

Specifically, according to one embodiment, firewall flow distribution agent 328 on the firewall 310 may evaluate flows established at the firewall at one or more points or intervals to determine one or more of these flows to offload to one or more network elements 304 in the network. The determination of which of the established flows at the firewall should be offloaded may be made using a heuristic (e.g., algorithm) based on an offload metric determined for the various flows established at the firewall 310.

For a flow that the firewall flow distribution agent 328 has determined should be offloaded, an offload message 374 specifying that flow (e.g., the tuple defining that flow) and the enforcement action (e.g., as determined at firewall 310) may be sent to network element flow distribution agent 338 at network element 304. Network element flow distribution agent 338 on network element 304 may receive an offload message 374 from firewall 310 and install the flow and enforcement action specified by the offload message 374 at the network element (e.g., store the tuple defining the flow and the associated enforcement action), such that when traffic associated with that flow is received at the network element 304 (e.g., from host 306) the enforcement action may be applied by the network element 304. In this way the enforcement action for the flow as determined by the firewall 310 according to policies installed on firewall 310 may be applied at the network element 304 at that point without the network element 304 forwarding that traffic to the firewall 310.

In addition to enforcing the actions for such flows at the network element 304, in some embodiments the network element flow distribution agent 338 may periodically update the firewall flow distribution agent 328 on the state of these flows using a heartbeat message 372 or the like. According to one embodiment therefore, the network element flow distribution 338 on a network element 304 on which a flow is installed may monitor that flow to determine if traffic associated with that flow has (or has not) been received. If traffic associated with that flow is received (e.g., within a certain time period), network flow distribution agent 338 may send heartbeat message 372 identifying that flow. When the firewall flow distribution agent 328 receives such a heartbeat message 372 it may update flow data associated with that flow at the firewall 310. For example, firewall flow distribution agent 328 may renew a flow session at the firewall associated with the flow specified in the heartbeat message 372. As such if no heartbeat message 372 is received for a flow installed at the firewall 310, that flow may expire at the firewall 310.

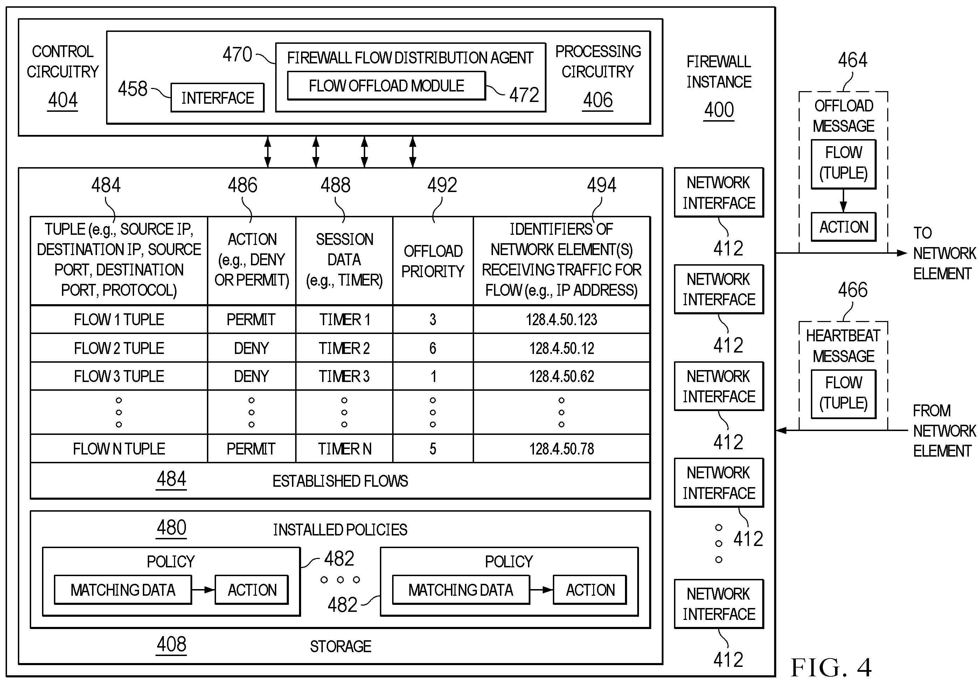

FIGURE 4 depicts a firewall instance adapted for offloading policy enforcement for flows in a network according to an embodiment. Firewall instance 400 may be a physical or virtual instance implemented on a computing device. Accordingly, firewall instance 400 may receive data, including network traffic (e.g., packets or the like), via an input/output (I/O) path. This I/O path may provide traffic data to control circuitry 404, which includes processing circuitry 406 and storage (i.e., memory) 408. Control circuitry 404 may send and receive commands, requests, and other suitable data using the I/O path where the I/O path may connect control circuitry 404 (and specifically processing circuitry 406) to one or more network interfaces 412 to which other elements of a network (e.g., switches, routers, hosts, etc.) can be connected. These network interfaces 412 may be any type of network interface, such as an RJ45 ethernet port, a coaxial port, etc.

Control circuitry 404 includes processing circuitry 406 and storage 408. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, octa-core, or any suitable number of cores). In some embodiments, processing circuitry 406 is distributed across multiple separate processors or processing units, for example, multiple of the same type of processing units or multiple different processors. The circuitry described herein may execute instructions included in software running on one or more general purpose or specialized processors.

Storage 408 may be an electronic storage device that includes volatile random-access memory (RAM) which does not retain its contents when power is turned off, and non-volatile memory, which does retain its contents when power is turned off. As referred to herein, the phrase "electronic storage device" or "storage device" or "memory" should be understood to mean any device for storing electronic data, computer software, instructions, or firmware, such as RAM, ROM, content-addressable memory (CAM) (including a TCAM), hard drives, optical drives, solid state storage devices, quantum storage devices, or any other suitable fixed or removable storage devices, or any combination of the same.

Firewall instance 400 is adapted to offload the enforcement of actions for flows to network elements where those actions were determined for those flows by the firewall instance 400 (e.g., after packet inspection of those flows). This allows the enforcement of policy actions on flows determined from stateful inspection of flows at network elements (including network edge elements) that are not themselves capable of such stateful packet inspection, reducing traffic in the network and reducing the computational burden on the firewall.

To illustrate in more detail, instructions may be executing on processing circuitry 406 for providing interface 458 through which policies 482 may be installed at the firewall instance 400. This interface 458, can for example, be an interface for a network management system (or a user thereof) through which such policies 482 can be received (e.g., an instruction to install a policy 482 on firewall instance 400 may be received from a network management system through interface 458). In particular, policies 482 can be defined by users (e.g., administrators) of a network using an interface associated with network management such as that offered by a cloud based network management system. The policies 482 are thus defined using a set of matching data along with an action (e.g., such as permit or deny). These defined policies 482 may be received through interface 458 and installed on the firewall instance 400 (e.g., stored in storage 408 of the firewall instance 400).

Using these installed policies, firewall instance 400 may make policy enforcement decisions (e.g., permit or deny) with respect to flows in the network with which it is being utilized. These policy enforcement decisions may result from firewall instance 400 applying these policies 482 to traffic forwarded to the firewall instance 400 from network elements in the network. When these policy enforcement decisions are made, the firewall instance 400 may establish one or more corresponding flows 484 at the firewall instance 400. Establishing the flow may comprise storing the flow 484 (i.e., the tuple defining the flow) in association with flow data for the flow 484 including a determined action 486 from a matching traffic control policy for the flow 484. Thus, when traffic associated with the same flow 484 is subsequently received, that traffic can be matched against the installed flow 484 and the corresponding action 486 for the installed flow 484 taken by the firewall instance 400.

The flow data associated with each of the established flows 484 may also include a session (e.g., session data) 488. The session 488 may be a stateful session (e.g., for TCP flows) that have a start and end time or keepalive timer, or may be stateless session (e.g., for UDP flows) that may have a timer and associated expiration time. In this manner, it can be determined when a session 488 for a flow 484 has ended based upon a timer associated with the session 488 for that flow 484. This timer may have, for example, an age out period whereby if the timer is not reset before expiration of the age out period the session 488 may be deemed as ended or inactive and the flow 484 removed from firewall instance 400 (e.g., removed from storage 408).

Firewall flow distribution agent 470 executing on processing circuitry 406 may include flow offload module 472. At one or more points or intervals, flow offload module 472 may evaluate flows 484 established at firewall instance 400 to determine if any of these flows 484 should be offloaded to other network elements. The determination of which of the established flows 484 at the firewall instance 400 should be offloaded may be made using a heuristic (e.g., algorithm) based on an offload metric. This offload metric may be based on almost any criteria desired, including determined data or a prediction associated with the flow 484, or a priority associated with the flow, where the prediction may be statically assigned or algorithmically determined. The offload metric could be, based on an amount of traffic for that flow (or meeting that policy) that is received at the firewall, a quality of service indicator associated with the policy, that a user has designated or specified that a policy should be offloaded, or some other criteria.

For a flow that flow offload module 472 has determined should be offloaded, an offload message 464 including that flow (e.g., the tuple defining that flow, such as a source IP, a destination IP, a source port, a destination port, and a protocol) and the enforcement action (e.g., permit or deny) may be sent to a network element for offload. As discussed, in some embodiments, a (e.g., offload) priority may be associated with flows 484 installed at the firewall instance 400. In cases where such a priority is maintained in association with flows 484 this priority may be included in an offload message 464 so that priority may be utilized by network elements receiving such an offload message 464.

In one embodiment, the offload message 464 may only be sent to, or obtained by, network elements involved with the flow 484 being offloaded, such as the network element at which traffic for that flow 484 is received from the device (e.g., host) sending traffic of that flow 484. To illustrate in more detail, network elements and the firewall instance 400 may serve as virtual tunnel end points (VTEP). Thus, when traffic of a flow 484 is initially redirected to the firewall instance 400 from a network element (e.g., a network edge element), this redirected traffic may be encapsulated in a VXLAN tunnel implemented in the network. Thus, the encapsulating packet for redirecting that traffic from that network element to the firewall instance 400 through a VXLAN tunnel may include, as the source IP address (e.g., for that VXLAN packet), the IP address of the network element that redirected the traffic for that flow to the firewall instance 400. As such, when a flow 484 is established at the firewall instance 400 (e.g., based on the inspection for traffic for that flow and any matching policies 482 at the firewall instance), that established flow 484 may be associated with an identifier 494 of any network elements that may be receiving traffic associated with that flow (e.g., an IP address of the network element that receives traffic for that flow 484 as determined from the source IP address of the VXLAN encapsulation packet including the redirected traffic for that flow 484).

Accordingly, when the flow offload module 472 at the firewall instance 400 determines a flow 484 should be offloaded, the flow offload module 472 can determine the identifier 494 (e.g., IP address) of the network element associated with the flow 484 to which an offload message 464 for that flow 484 should be sent. The offload message 464 for that flow 484 can thus be directed specifically to that network element. In one embodiment, for example, these offload messages 464 may be distributed to network elements according to a publish subscribe distribution architecture (e.g., a mounting framework). The flow offload module 472 can, for example, publish offload messages 464 in association with the identifiers 494 (e.g., to a channel, location, queue, etc. associated with the identifier 494 of any network elements associated with the flow 484 being offloaded).

After sending an offload message 464 for a flow 484, the firewall instance 400 may update session 488. Specifically, the firewall instance 400 may update a session 488 for a flow 484 based on traffic for that flow 484 as received at firewall instance 400 (e.g., when it is redirected from a network element). The firewall instance (e.g., the firewall flow distribution agent 470) may also update session 488 for a flow 484 based on a received heartbeat message 466 specifying that flow 484 (e.g., including the tuple identifying that flow 484). Such a heartbeat message 466 may be generated by a network element on which that flow is installed. The updating of the session for a flow 488 may include renewing the session 488 associated with the flow 484 (e.g., resetting, recalculating, or renewing the timer associated with the session 488 for that flow 484). As such, if no traffic associated with a flow 484 is received at the firewall instance 400 and no heartbeat message 466 is received at the firewall instance 400 specifying that flow 484 the session 488 for that flow 484 will naturally age out (e.g., expire) and be removed from established flows 484 at the firewall instance 400.

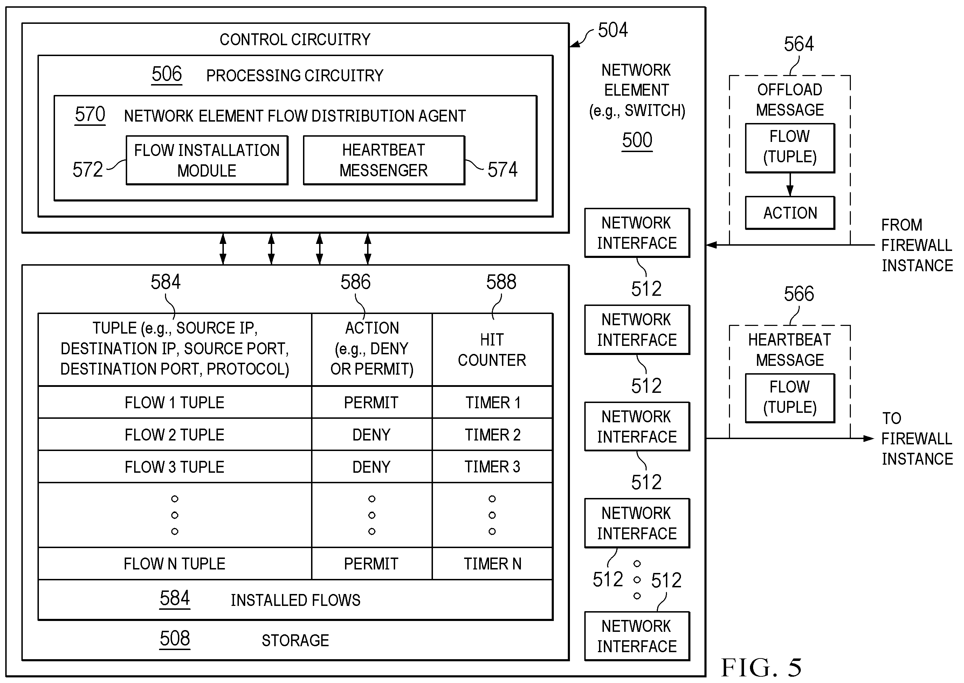

Moving now to FIGURE 5, one embodiment of a network element adapted for offloading policy enforcement for flows in a network is depicted. Network element 500 may be, for example, a (e.g., TOR) switch, router or other physical or virtual network element implemented on a computing device. Accordingly, network element 500 may receive data, including network traffic (e.g., packets or the like) through network interface 512, and include control circuitry 504, processing circuitry 506 and storage (i.e., memory) 508 for use in processing such network traffic.

Network element 500 is adapted to receive a flow for offload along with a corresponding action as determined for that flow from a firewall instance and install that flow at the network element 500. By installing the flow at the network element 500 the network element 500 can enforce the action as determined for that flow by a firewall instance. As the network element 500 can enforce actions for flows installed at that network element 500 in association with traffic for that flow received at the network element (e.g., without forwarding such traffic to a firewall instance), the enforcement of actions determined from stateful inspection of flows at a firewall may be undertaken by the network element 500 even when the network element 500 is itself incapable of such stateful packet inspection. Such a capability thus serves to reduce traffic in the network and reduce computational burden on the firewall instance.

Network element flow distribution agent 570 executing on processing circuitry 506 may thus receive an offload message 564 from a firewall instance, where that offload message 564 may specify a flow (e.g., a tuple defining that flow, such as a source IP, a destination IP, a source port, a destination port, and a protocol) and an enforcement action (e.g., permit or deny). The offload message 564 may also include a (e.g., offload) priority associated with the flow specified in the offload message 564.

In one embodiment, for example, when initializing (or re-initializing, booting, or at some other point) network element flow distribution agent 570 on network element 500 may subscribe to messages associated with an identifier of that network element 500 (e.g., an IP address of that network element 500). For example, the network element may send a subscription notification including the identifier (e.g., IP address) of the network element 500 to each firewall instance subscribing to messages for the identifier of that network element 500. Accordingly, when an offload message 564 is published by a firewall instance in association with the identifier (e.g., IP address) for that network element 500 that offload message 564 may be received (or otherwise obtained) by that network element 500.

A network element flow distribution agent may thus receive an offload message 564 (e.g., an offload message published to its IP address), and install the flow 584 and enforcement action 586 specified by the offload message 564 at the network element 500 (e.g., store the tuple defining the flow and the associated enforcement action), such that when traffic associated with that installed flow 584 is received at the network element 500 the enforcement action 586 may be applied by the network element 500. In this manner, the enforcement action 586 for the flow 584 may be applied at the network element 500 without the network element 500 forwarding that traffic to the firewall.

According to one embodiment, when an offload message 564 is received, a determination of whether the flow specified in the offload message 564 is to be installed may be made, and that flow is installed at the network element 500 only if it is determined that specified flow is to be installed. Flow installation module 572 of network element flow distribution agent 570 can make such a determination. In one embodiment, flow installation module 572 may use a best effort methodology with respect to the flow specified in offload messages 564, and may make an (e.g., independent) determination whether the flow specified in offload message 564 should (or should not) be installed at the network element 500. The determination whether to (or not to) install a flow at network element 500 may be made based on a wide variety of criteria such as hardware resources associated with, or available at, the network element 500, priorities associated with the flow as received in the offload message 564 or determined at the network element, or other factors.

When flow installation module 572 determines that the flow specified in offload message 564 should be installed at network element 500, network element flow distribution agent 570 may install the flow at the network element 500. The installation of the flow can include storing the flow 584 (i.e., the tuple defining the flow) in association with the determined action 586 as specified in the offload message 564 being processed by the network element flow distribution agent 570. Once the flow 584 is installed at network element 500 when traffic associated with that flow 584 is subsequently received at that network element 500, the network element flow distribution agent 570 may determine that the flow 585 is installed at the network element 500 and take the enforcement action 584 specified in association with that flow 585 without redirecting the traffic for that flow 584 to a firewall.

Network element flow distribution agent 570 may also include heartbeat messenger 574 for updating firewall instances on the state of installed flows 584 using a heartbeat message 566. According to one embodiment therefore, heartbeat messenger 574 may maintain a hit counter 588 associated with each flow 584 installed at the network element 500. Each time traffic (e.g., a packet) associated with that flow 584 is received at the network element 500 the heartbeat messenger 574 may increment (or otherwise update) this hit counter 588 associated with the flow 584. This hit counter 588 may be reset at a heartbeat interval. The period of this heartbeat interval may be fixed or algorithmically determined based on a heuristic where the heuristic used to determine such a heartbeat interval can, for example, be a function based on an age out time for flow sessions on a firewall in the network. At the expiration of this heartbeat interval then, if the hit counter for a flow is non-zero a heartbeat message 566 (e.g., a keepalive message) specifying that flow 584 (e.g., including the tuple defining that flow) may be sent to the firewall (e.g., one, multiple, or all firewall instances).

In one embodiment, such as where a firewall in the network may be implemented in multiple instances, a heartbeat message 566 may not only specify the flow 584 (e.g., include the tuple defining the flow) but may additionally specify identifying information associated with network element 500 on which the flow 584 is installed (e.g., the network element 500 sending the heartbeat message 566). This network element identifying information, can for example, be included in a field of a header of a packet including the heartbeat messages 566 and may be, for example, a MAC address of the network element 500 or another type of identifier for the network element 500.

In this manner, in cases where a firewall comprises multiple firewall instances, the heartbeat message 566 may be routed to the appropriate firewall instance (e.g., the firewall instance responsible for processing traffic for that network element 500 or from which that flow 584 was offloaded to that network element 500). For example, a load balancer balancing traffic between different firewall instances may utilize network element identifying information in the heartbeat message 566 to load balance the heartbeat message 566 from the network element 500 to a correct firewall instance without having to store any additional state at the load balancer or perform any additional parsing or packet processing (e.g., greater than what would be required for standard load balancing to those firewall instances).

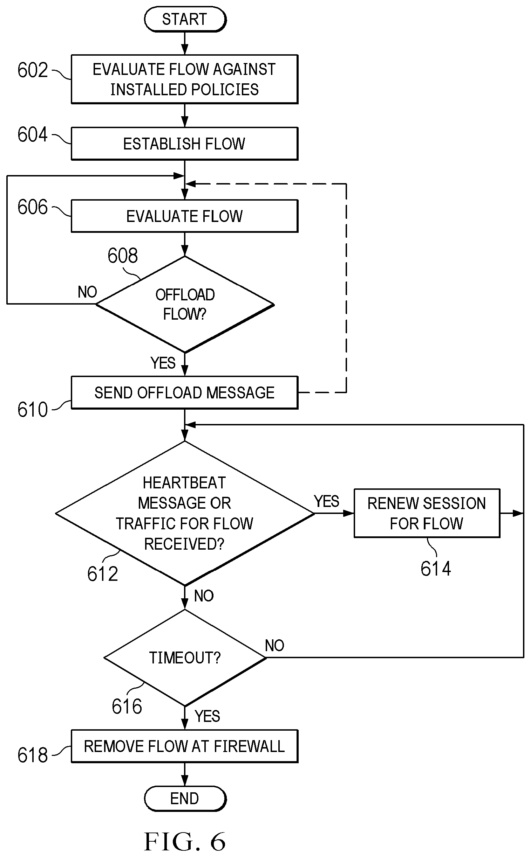

FIGURE 6 depicts one embodiment of a method for offloading policy enforcement for flows from a firewall. Initially policies installed at a firewall may be evaluated against flows (e.g., traffic associated with those flows) at a firewall (STEP 602). When policy enforcement decisions are made for a flow, the firewall may establish the flow at the firewall (STEP 604), including storing the flow in association with the determined action from a matching policy for the flow.

At one or more points or intervals, the flow established at the firewall may be evaluated to determine if that flow should be offloaded to another network element (STEP 606). The flow may be evaluated based on an offload metric that may be determined based on a wide variety of criteria and the flow may be evaluated relative to other flows established at the firewall. When it is determined that the flow should be offloaded (Y Branch of STEP 608), an offload message including that flow (e.g., the tuple defining that flow, such as a source IP, a destination IP, a source port, a destination port, and a protocol) and the enforcement action (e.g., permit or deny) may be sent (STEP 610). In some embodiments, as a firewall may not maintain data regarding whether such a flow has been installed at a network element, this flow may be reevaluated for offloading even in cases where an offload message is sent to a network element.

After a flow is established, traffic for that flow may be received. Alternatively, or additionally, a heartbeat message specifying that flow may be received. When such traffic or heartbeat messages are received (Y Branch of STEP 612) a session associated with that flow can be renewed (STEP 614). As such if no traffic or heartbeat message is received for an established flow (e.g., within a timeout period STEP 616) the session will not be renewed and will eventually expire. The flow can then be removed at the firewall (STEP 618).

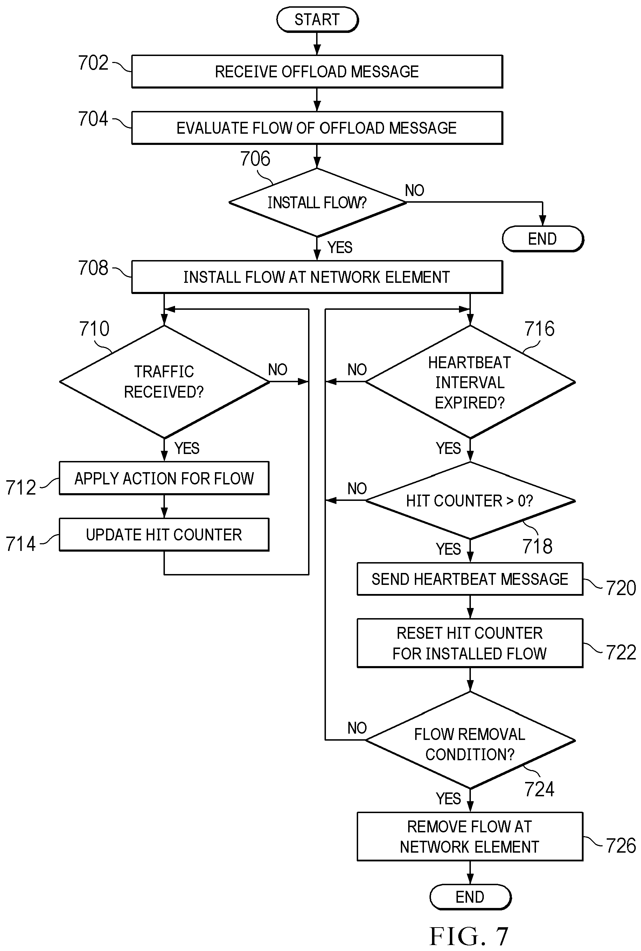

Referring to FIGURE 7, one embodiment of a method for offloading policy enforcement for flows to a network element is depicted. Initially a network element may receive an offload message specifying a flow and an action (STEP 702). A determination whether the flow specified in offload messages should (or should not) be installed at the network element may be made (STEP 704). Such a determination may be made using a best effort methodology whereby the flow is evaluated based on a set of criteria associated with the flow, the network element, the network (e.g., traffic), etc. If it is determined that the flow should be installed (Y Branch of STEP 706), the flow may be installed at the network element (STEP 708). This installation of the flow may include storing the flow in association with the determined action as specified in the offload message.

Accordingly, when traffic associated with that flow is subsequently received at that network element (Y Branch of STEP 710), the action specified in association with that flow may be applied (STEP 712) (e.g., without redirecting the traffic for that flow to the firewall). Moreover, a hit counter associated with the flow may be updated based on the reception of traffic for the flow (STEP 714). This update may cause the hit counter to indicate in some manner that traffic for that flow was received.

Additionally, once a flow is installed at a network element a heartbeat interval timer associated with a heartbeat interval may be maintained in association with the flow. The period of this heartbeat interval may be fixed or algorithmically determined based on a heuristic (e.g., based on an age out time for flow sessions on the firewall in the network). At the expiration of this heartbeat interval then (Y Branch of STEP 716), if the hit counter for a flow is non-zero (or otherwise indicates traffic for the flow was received at the network element during the heartbeat interval) (Y Branch of STEP 718), a heartbeat message specifying that flow may be sent to the firewall (STEP 720). The hit counter for that flow can then be reset (STEP 722).

In some cases, if the hit counter for a flow is zero at the end of a heartbeat interval (e.g., no traffic was received during the heartbeat interval) (N Branch of STEP 718), it can be determined if a flow removal condition has been met (STEP 724). This flow removal condition may be, for example, that no traffic has been received for a flow for a certain number (e.g., one or more) heartbeat intervals). If the flow removal condition is met (Y Branch of STEP 724), the flow may be deinstalled (e.g., removed) at the network element (STEP 726).

It will be understood that while specific embodiments have been presented herein, these embodiments are merely illustrative, and not restrictive. Rather, the description is intended to describe illustrative embodiments, features, and functions in order to provide an understanding of the embodiments without limiting the disclosure to any particularly described embodiment, feature, or function, including any such embodiment, feature, or function described. While specific embodiments of, and examples for, the embodiments are described herein for illustrative purposes only, various equivalent modifications are possible within the spirit and scope of the invention, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments of the invention will be employed without a corresponding use of other features, and features described with respect to one embodiment may be combined with features of other embodiments without departing from the scope and spirit of the disclosure as set forth.

The disclosure in the application also includes the following numbered clauses:
1. A method for distributing policy enforcement in a network, comprising:
   at a firewall in a network:
   determining that a flow matches a policy installed at the firewall;
   determining that the flow should be offloaded;
   sending an offload message to a network element, the offload message specifying the flow and an enforcement action determined for the flow at the firewall from the policy, wherein, in response to receiving the offload message the network element:
      determines that the flow should be installed at the network element;
      installs the flow at the network element in association with the enforcement action; and
      based on the installation of the flow at the network element, controls traffic associated with the flow at the network element according to the enforcement action determined at the firewall without forwarding the traffic to the firewall.
2. The method of clause 1, wherein the determination that the flow matches the traffic control policy is based on L4 or higher packet inspection.
3. The method of clause 1, wherein determining that the flow should be offloaded comprises selecting the flow from a set of flows at the firewall based on an offload metric.
4. The method of clause 3, wherein the offload metric is based on an amount of traffic associated with the flow.
5. The method of clause 1, wherein the offload message is sent only to the network element.
6. The method of clause 5, wherein sending the offload message comprises:
   determining an IP address of the network element associated with the flow at the firewall; and
   publishing the offload message to subscribers associated with the IP address in a publisher/subscriber message framework.
7. The method of clause 1, further comprising:
   maintaining a flow session associated with the flow at the firewall; and
   renewing the flow session when a heartbeat message is received from the network element.
8. The method of clause 8, wherein the network element:
   maintains a hit counter associated with the installed flow,
   updates the hit counter based on the traffic associated with the flow and a heartbeat interval, and
   sends heartbeat messages to the firewall based on the hit counter.
9. The method of clause 1, wherein the network element is a network edge element.
10. The method of clause 3, wherein the network edge element is a top of rack (TOR) switch.
11. The method of clause 1, wherein the firewall comprises multiple firewall instances.
12. A network element, comprising:
   a processor;
   a non-transitory computer readable medium, comprising instructions for:
      receiving an offload message specifying a flow and an enforcement action, wherein the enforcement action was determined at a firewall;
      determining that the flow should be installed;
      storing the flow in association with the enforcement action;
      determining received traffic is associated with the flow; and
      applying the enforcement action to the received traffic at the network element without forwarding traffic to the firewall.
13. The network element of clause 12, wherein the instructions further comprise instructions for updating a hit counter based on the received traffic.
14. The network element of clause 12, wherein the instructions further comprise instructions for sending a heartbeat message to the firewall based on the hit counter, wherein the heartbeat message identifies the flow and is sent in a datapath.
15. The network element of clause 14, wherein the instructions further comprise instructions for resetting the hit counter based on a heartbeat interval.
16. The network element of clause 15, wherein a period of the heartbeat interval is based on an age out time for a flow session on the firewall.
17. A non-transitory computer readable medium, comprising instruction for:
   determining that traffic matches a policy installed at a firewall;
   establishing a flow associated with the traffic at the firewall;
   determining that the flow should be offloaded;
   sending an offload message to a network element, the offload message specifying the flow and an enforcement action determined for the flow at the firewall from the policy, the offload message adapted to cause a network element to:
      determine that the flow should be installed at the network element;
      install the flow at the network element in association with the enforcement action; and
      based on the installation of the flow at the network element, control traffic associated with the flow at the network element according to the enforcement action determined at the firewall without routing the traffic to the firewall.
18. The non-transitory computer readable medium of clause 17, wherein the enforcement action is determined based on stateful packet inspection at the firewall.
19. The non-transitory computer readable medium of clause 17, wherein sending the offload message comprises publishing the offload message in association with an identifier of the network element.
20. The non-transitory computer readable medium of clause 17, further comprising instructions for:
   maintaining a flow session associated with the flow; and
   renewing the flow session when traffic associated with the flow is received at the firewall or when a heartbeat message associated with the flow is received from the network element.

## Claims

1. A method for distributing policy enforcement in a network, comprising:
at a firewall in a network:
determining that a flow matches a policy installed at the firewall;
determining that the flow should be offloaded;
sending an offload message to a network element, the offload message specifying the flow and an enforcement action determined for the flow at the firewall from the policy, wherein, in response to receiving the offload message the network element:
determines that the flow should be installed at the network element;
installs the flow at the network element in association with the enforcement action; and
based on the installation of the flow at the network element, controls traffic associated with the flow at the network element according to the enforcement action determined at the firewall without forwarding the traffic to the firewall.

2. The method of claim 1, wherein the determination that the flow matches the traffic control policy is based on L4 or higher packet inspection.

3. The method of claim 1 or claim 2, wherein determining that the flow should be offloaded comprises selecting the flow from a set of flows at the firewall based on an offload metric that is based on an amount of traffic associated with the flow.

4. The method of any preceding claim, wherein sending the offload message comprises:
determining an IP address of the network element associated with the flow at the firewall; and
publishing the offload message to subscribers associated with the IP address in a publisher/subscriber message framework.

5. The method of any preceding claim, further comprising:
maintaining a flow session associated with the flow at the firewall; and
renewing the flow session when a heartbeat message is received from the network element.

6. The method of claim 5, wherein the network element:
maintains a hit counter associated with the installed flow,
updates the hit counter based on the traffic associated with the flow and a heartbeat interval, and
sends heartbeat messages to the firewall based on the hit counter.

7. A network element, comprising:
a processor;
a non-transitory computer readable medium, comprising instructions which, when executed by one or more processors, cause the one or more processors to:
receive an offload message specifying a flow and an enforcement action, wherein the enforcement action was determined at a firewall;
determine that the flow should be installed;
store the flow in association with the enforcement action;
determine received traffic is associated with the flow; and
apply the enforcement action to the received traffic at the network element without forwarding traffic to the firewall.

8. The network element of claim 7, wherein the instructions further comprise instructions which, when executed by the one or more processors, cause the one or more processors to update a hit counter based on the received traffic.

9. The network element of claim 7 or claim 8, wherein the instructions further comprise instructions which, when executed by the one or more processors, cause the one or more processors to send a heartbeat message to the firewall based on the hit counter, wherein the heartbeat message identifies the flow and is sent in a datapath.

10. The network element of claim 9, wherein the instructions further comprise instructions which, when executed by the one or more processors, cause the one or more processors to reset the hit counter based on a heartbeat interval.

11. The network element of claim 10, wherein a period of the heartbeat interval is based on an age out time for a flow session on the firewall.

12. A non-transitory computer readable medium, comprising instruction which, when executed by one or more processors, cause the one or more processors to:
determine that traffic matches a policy installed at a firewall;
establish a flow associated with the traffic at the firewall;
determine that the flow should be offloaded;
send an offload message to a network element, the offload message specifying the flow and an enforcement action determined for the flow at the firewall from the policy, the offload message adapted to cause a network element to:
determine that the flow should be installed at the network element;
install the flow at the network element in association with the enforcement action; and
based on the installation of the flow at the network element, control traffic associated with the flow at the network element according to the enforcement action determined at the firewall without routing the traffic to the firewall.

13. The non-transitory computer readable medium of claim 12, wherein the enforcement action is determined based on stateful packet inspection at the firewall.

14. The non-transitory computer readable medium of claim 12 or claim 13, wherein sending the offload message comprises publishing the offload message in association with an identifier of the network element.

15. The non-transitory computer readable medium of any of claims 12 to 15, further comprising instructions which, when executed by the one or more processors, cause the one or more processors to:
maintain a flow session associated with the flow; and
renew the flow session when traffic associated with the flow is received at the firewall or when a heartbeat message associated with the flow is received from the network element.
